# EUROPÄISCHE PATENTANMELDUNG

(11) **EP 2 073 344 A2**
(43) Veröffentlichungstag der Anmeldung: **24.06.2009**
(21) Anmeldenummer: 08105985.9
(22) Anmeldetag: 16.12.2008
(51) Int. Cl.: H02K 1/02

(54) **Gleichstrommaschine**

(30) Priorität: 19.12.2007 DE 102007061381
(71) Anmelder: Robert Bosch GmbH, 70442 Stuttgart (DE)
(72) Erfinder: Schustek, Siegfried, 71254, Ditzingen (DE)

(57) **Zusammenfassung**

Die Erfindung betrifft eine Gleichstrommaschine, insbesondere einen Starter (10) für eine Brennkraftmaschine, mit einem im Wesentlichen ringförmigen Polgehäuse (28), an dessen Innenumfang Permanentmagnete (32) und Flussleitstücke (33) angeordnet sind. Erfindungsgemäß sind als Permanentmagnete (32) Magnete mit einer Remanenz von mindestens 600 mT verwendet und die Flussleitstücke (33) einteilig mit dem Polgehäuse (28) ausgebildet. Aufgrund der Kombination von Magneten hoher Remanenz und einem entsprechend großen Querschnitt des Polgehäuses (28) für den magnetischen Rückschluss können die Flussleitstücke (33) direkt an das Polgehäuse (28) angeformt werden, wodurch sich eine deutliche Ersparnis an Material und Fertigungskosten ergibt.

## Beschreibung

### Stand der Technik

Die Erfindung geht aus von einer Gleichstrommaschine nach der Gattung des unabhängigen Anspruchs.

Aus der DE 197 26 726 C2 ist eine Gleichstrommaschine in der Ausführung als Starter zum Andrehen von Brennkraftmaschinen in Kraftfahrzeugen bekannt, welche am Innenumfang eines ringförmigen Polgehäuses zur Erregung der Maschine Permanentmagnete aufweist. Über den Werkstoff der verwendeten Permanentmagnete und die Gestaltung der Pole der Maschine sind hierbei keine näheren Ausführungen gemacht. Grundsätzlich ist es jedoch bekannt, beispielsweise aus der DE 43 11 227 C2, eine als Anlasser für Brennkraftmaschinen gestaltete Gleichstrommaschine mit höherwertigen Permanentmagneten, insbesondere mit FeNdB-Permanentmagneten, anstelle von Ferritmagneten zur Steigerung der Maschinenleistung zu bestücken.

Aus der DE 101 48 652 A1 ist eine Gleichstrommaschine für eine Starteranlage von Fahrzeugmotoren bekannt, welche ein ringförmiges Polgehäuse aufweist, an dessen Innenumfang in einer Haltevorrichtung Permanentmagnete und Flussleitstücke befestigt sind. Dabei befinden sich in jeder Tasche des Halterkäfigs jeweils ein Permanentmagnet und ein Flussleitstück, die in den Taschen klemmend gehalten sind und gemeinsam die Statorpole bilden. Als Magnete kommen Ferritmagnete zum Einsatz. Um dabei die typische Nebenschluss-Charakteristik der Drehzahl-Drehmoment-Kennlinie dieser Maschinen der Reihenschluss-Charakteristik von elektrisch erregten Maschinen anzunähern ist ein Teil der Magnete durch ein Stück Weicheisen als Flussleitstück ersetzt. Auf diese Weise lässt sich die Leerlaufdrehzahl anheben und das Kurzschlussmoment des Motors vergrößern. Die entsprechenden Werte für den Betriebspunkt der Maschine können ebenfalls geringfügig erhöht werden. Die verwendeten Ferritmagnete sind bei derartigen Maschinen relativ dick, wodurch sich eine große Bauform ergibt. Die Teilezahl und der Montageaufwand für die Maschine sind ebenfalls hoch, da die Magnete und die Flussleitstücke einzeln montiert werden müssen unter Zuhilfenahme eines zusätzlichen, in der Maschine zu positionierenden und zu befestigenden Haltekäfigs.

### Offenbarung der Erfindung

Die erfindungsgemäße Gleichstrommaschine mit den Merkmalen des unabhängigen Anspruchs hat demgegenüber den Vorteil, dass ohne Vergrößerung des Bauvolumens die Leistung der Maschine erhöht werden kann bei gleichzeitiger Verringerung des Fertigungs- und des Materialaufwandes. Hierbei liefern die höherwertigen Permanentmagnete die zur Leistungssteigerung notwendige Durchflutung und die für den magnetischen Rückschluss benötigte größere Dicke des Rückschlussjochs des Polgehäuses eröffnet die Möglichkeit einer einteiligen Ausbildung der Flussleitstücke und des Polgehäuses.

Besonders vorteilhaft ist es, wenn als Permanentmagnete Selten-Erde-Magnete, vorzugsweise FeNdB-Magnete verwendet werden. Letztere besitzen eine Remanenz von cirka 1000-1200 mT, was nahezu dem dreifachen Wert herkömmlicher Ferritmagnete entspricht. Ein Mindestwert für die Remanenz der erfindungsgemäß verwendeten Permanentmagnete liegt bei cirka 600 mT. Durch eine Beimischung von Dysprosium wird insbesondere bei FeNdB-Magneten eine Erhöhung der Korrosionsbeständigkeit der Magnete erreicht. Alternativ zu FeNdB-Magneten können grundsätzlich auch SmCo-Magnete eingesetzt werden, welche jedoch wesentlich teurer als FeNdB-Magnete sind.

In fertigungstechnischer Hinsicht ist es vorteilhaft, wenn das Polgehäuse massiv ausgeführt ist und die Flussleitstücke durch Umformung des Materials des Polgehäuses gebildet werden. Hierbei können die Flussleitstücke entweder durch eingedrückte Abschnitte des Polgehäuses ausgebildet oder durch Kneten des Eisenmaterials des Polgehäuses aus diesem heraus geformt werden.

Eine vorteilhafte Alternative zur einteiligen massiven Ausbildung der Flussleitstücke und des Polgehäuses ist die geblechte Herstellung des Polgehäuses durch Stanzpaketieren, wobei die Flussleitstücke durch die entsprechende Gestaltung der Blechschnitte gebildet werden. Diese Ausbildung hat den Vorteil, dass die gestanzten Bleche hochgenau gefertigt werden können, wodurch die Maßgenauigkeit der Bohrung des Polgehäuses verbessert wird. Als Folge dessen kann der Arbeitsluftspalt zum Rotor der Maschine verkleinert werden, was wiederum eine weitere Materialeinsparung zulässt, die sich insbesondere bei teuren Magnetwerkstoffen wie FeNdB auszahlt. Bei Verwendung dieses Magnetmaterials reduziert sich die Magnetdicke gegenüber Ferriten auf etwa die Hälfte, so dass die Flussleitstücke in gleichem Maße flacher und tendenziell breiter werden als bei Startern mit Ferritmagneten. Hierbei lassen sich mit FeNdB-Magneten Maschinenleistungen realisieren, welche ansonsten Maschinen mit elektrischer Erregung vorbehalten sind. Gleichzeitig können die Abmessungen der Maschine deutlich reduziert und der Materialeinsatz an Kupfer und Eisen entsprechend verringert werden bei zusätzlicher Verringerung eines insbesondere bei Startern mechanisch schwer zu beherrschenden hohen Ankerträgheitsmomentes.

Weiterhin ist es zweckmäßig, wenn sowohl die durch Materialumformung des Polgehäuses gebildeten wie auch die beim Stanzpaketieren des Polgehäuses aus den Blechen hergestellten Flussleitstücke die Form von Ringsegmenten haben. Dies gilt auch für die Form der Permanentmagnete, weil bei einer derartigen, an die Form des Polgehäuses und des Arbeitsluftspaltes angepassten Gestaltung der Flussleitstücke und der Magnete die Baugröße der Maschine klein gehalten werden kann. Andererseits sind ringsegmentförmig gestaltete FeNdB-Permanentmagnete deutlich teurer als quaderförmige Magnete, sodass zur Kosteneinsparung bei der geblechten Ausführung des Polgehäuses im Blechschnitt auch eine Aussparung entsprechend einer ausgestanzten Tasche für die Aufnahme quaderförmiger Permanentmagnete vorgesehen werden kann. Die Positionierung und Arretierung ringsegmentförmiger Permanentmagnete zwischen ringsegmentförmigen Flussleitstücken kann in sehr sicherer und vorteilhafter Weise realisiert werden durch jeweils wenigstens eine wellenförmige Feder, welche sich in Umfangsrichtung einerseits an den Flussleitstücken und andererseits an den Magneten des Nachbarpols abstützt.

Für die magnetische Auslegung der Maschine ist es vorteilhaft, wenn bei einer Gesamt-Polbedeckung von etwa 0,7 bis 0,8 die Bedeckung durch die erfindungsgemäßen Flussleitstücke etwa 0,25 bis 0,32 beträgt. Der verbleibende Freiraum zwischen dem Permanentmagnet und dem nachfolgenden Flussleitstück liegt etwa in der gleichen Größenordnung wie die Bedeckung durch die Flussleitstücke. Bei Selten-Erd-Magneten ist hierbei die Magnetdicke etwa gleich der Eisendicke des Polgehäuses.

In magnetischer Hinsicht ist es weiterhin sehr vorteilhaft, wenn in Umfangsrichtung zwischen den Permanentmagneten und den Flussleitstücken ein Luftspalt mindestens in der Größenordnung des Arbeitsluftspaltes zwischen Stator und Rotor der Maschine belassen wird. So kann die Menge des FeNdB-Materials bei gleichem Fluss etwas reduziert werden, da der magnetische Kurzschluss durch das Flussleitstück an der Magnetkante verringert wird. Die Ausbildung dieses Luftspaltes wird zweckmäßigerweise durch wenigstens einen in Umfangsrichtung weisenden Vorsprung an der dem Dauermagneten zugewandten Seitenfläche des Flussleitstückes erzeugt.

Weitere vorteilhafte Einzelheiten der Erfindung ergeben sich aus den Unteransprüchen und aus der Beschreibung der Ausführungsbeispiele.

### Kurze Beschreibung der Zeichnungen

Ausführungsbeispiele der Erfindung sind in den Zeichnungen dargestellt und in der nachfolgenden Beschreibung näher erläutert.

### Es zeigen:

- Figur 1: einen Längsschnitt einer elektrischen Maschine in der Ausführung als Starter für eine Brennkraftmaschine,
- Figur 2: einen Schnitt durch den Stator einer Gleichstrommaschine mit aus dem Material des Polgehäuses heraus geformten Flussleitstücken,
- Figur 3: einen Schnitt durch den Stator einer Gleichstrommaschine mit stanzpaketiertem Polgehäuse,
- Figur 4: einen Schnitt durch den Stator einer Gleichstrommaschine, bei dem nur jeder zweite Pol mit einem Permanentmagneten bestückt ist, und
- Figur 5: eine Abwicklung des Stators der Maschine vom Rotor aus gesehen.

### Ausführungsformen der Erfindung

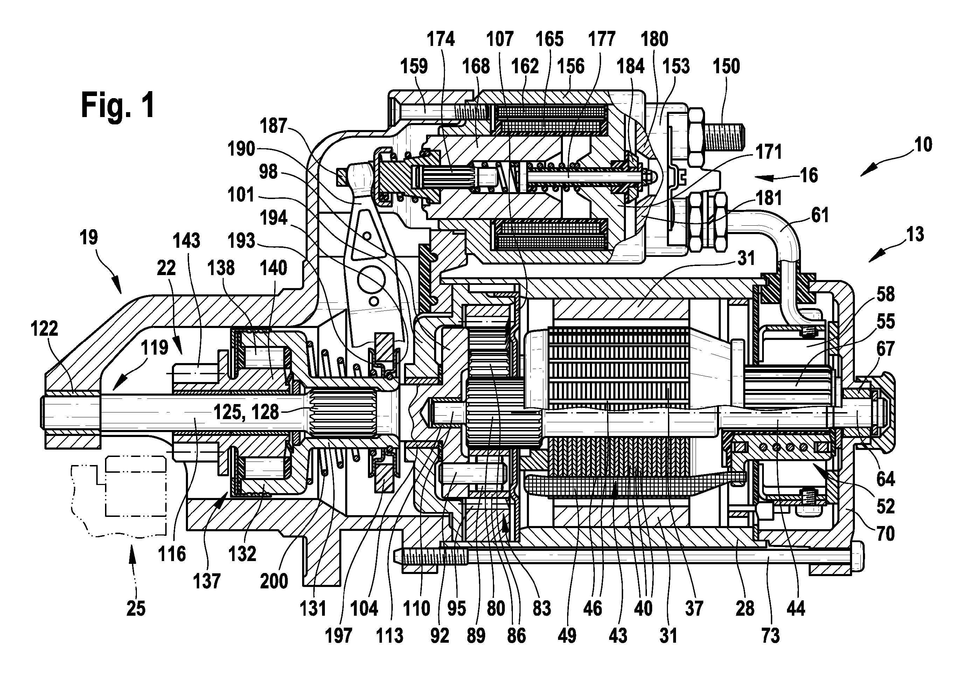

In der Figur 1 ist ein Starter 10 für eine Brennkraftmaschine dargestellt. Dieser weist einen Startermotor 13 und ein Einrückrelais 16 auf. Der Startermotor 13 und das Einrückrelais 16 sind an einem gemeinsamen Antriebslagerschild 19 befestigt. Der Startermotor 13 dient dazu, ein Andrehritzel 22 anzutreiben, wenn es im Zahnkranz 25 der hier nicht dargestellten Brennkraftmaschine eingespurt ist.

Der Startermotor 13 weist ein Polgehäuse 28 auf, das an seinem Innenumfang permanentmagnetisch erregte Pole 31 trägt. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem vom Andrehritzel 22 abgewandten Ende der Antriebswelle 44 ist des Weiteren ein Kommutator 52 angebracht, der u.a. aus einzelnen Kommutatorlamellen 55 aufgebaut ist. Die Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polgehäuse 28 ergibt. Eine zwischen dem Einspurrelais 16 und dem Startermotor 13 angeordnete Stromzuführung 61 versorgt im Einschaltzustand die Kohlebürsten 58 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatordeckel 70 wiederum wird mittels Zuganker 73, die über den Umfang des Polrohrs 28 verteilt angeordnet sind (Schrauben, beispielsweise 2, 3 oder 4 Stück) im Antriebslagerschild 19 befestigt. Es stützt sich dabei das Polgehäuse 28 am Antriebslagerschild 19 ab, und der Kommutatorlagerdeckel 70 am Polgehäuse 28.

In Antriebsrichtung schließt sich an den Anker 37 ein sogenanntes Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlager 89 auf Achszapfen 92 abgestützt sind. Die Planetenräder 86 wälzen in einem Hohlrad 95 ab, das im Polgehäuse 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polgehäuses 28 ab.

Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist, ab. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, insbesondere bei Startern für Lastkraftwagen ein Abschnitt mit einer sogenannten Geradverzahnung 125 (Innenverzahnung), die Teil einer sogenannten Wellen-Nabe-Verbindung ist. Bei Startern für Personenkraftwagen wird üblicherweise anstelle der Geradverzahnung ein Steilgewinde benützt. Die Welle-Nabe-Verbindung 128 ermöglicht bei einer Geradverzahnung das axial geradlinige Gleiten eines Mitnehmers 131. Dieser Mitnehmer 131 ist ein hülsenartiger Fortsatz, der einstückig mit einem topfförmigen Außenring 132 des Freilaufs 137 ist. Dieser Freilauf 137 (Richtgesperre) besteht des Weiteren aus dem Innenring 140, der radial innerhalb des Außenrings 132 angeordnet ist.

Zwischen dem Innenring 140 und dem Außenring 132 sind Klemmkörper 138 angeordnet. Diese Klemmkörper 138 verhindern in Zusammenwirkung mit dem Innen- und dem Außenring eine Relativdrehung zwischen dem Außenring und dem Innenring in einer zweiten Richtung. Mit anderen Worten: Der Freilauf 137 ermöglicht eine Relativbewegung zwischen Innenring 140 und Außenring 132 nur in eine Richtung. In diesem Ausführungsbeispiel ist der Innenring 140 einstückig mit dem Andrehritzel 22 und dessen Schrägverzahnung 143 (Außenschrägverzahnung) ausgeführt.

Der Vollständigkeit halber sei hier noch auf den Einspurmechanismus eingegangen. Das Eindrückrelais 16 weist einen Bolzen 150 auf, der ein elektrischer Kontakt ist und der an den Pluspol einer elektrischen Starterbatterie, die hier nicht dargestellt ist, angeschlossen ist. Dieser Bolzen 150 ist durch einen Relaisdeckel 153 hindurchgeführt. Dieser Relaisdeckel 153 schließt ein Relaisgehäuse 156 ab, das mittels mehrerer Befestigungselemente 159 (Schrauben) am Antriebslagerschild 19 befestigt ist. Im Einrückrelais 16 ist weiterhin eine Einzugswicklung 162 und eine sogenannte Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 bewegt wird. Mit dieser Bewegung der Schubstange 174 zum Schaltbolzen 177 wird dieser aus seiner Ruhelage in Richtung zu zwei Kontakten 180 und 181 bewegt, so dass eine am Ende des Schaltbolzens 177 angebrachte Kontaktbrücke 184 beide Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Der Startermotor 13 wird dabei bestromt.

Das Einrückrelais 16 bzw. der Anker 168 hat aber darüber hinaus auch die Aufgabe, mit einem Zugelement 187 einen dem Antriebslagerschild 19 drehbeweglich angeordneten Hebel zu bewegen. Dieser Hebel 190, üblicherweise als Gabelhebel ausgeführt, umgreift mit zwei hier nicht dargestellten "Zinken" an ihrem Außenumfang zwei Scheiben 193 und 194, um einen zwischen diesen eingeklemmten Mitnehmerring 197 zum Freilauf 137 hin gegen den Widerstand der Feder 200 zu bewegen und dadurch das Andrehritzel 22 in dem Zahnkranz 25 einzuspuren.

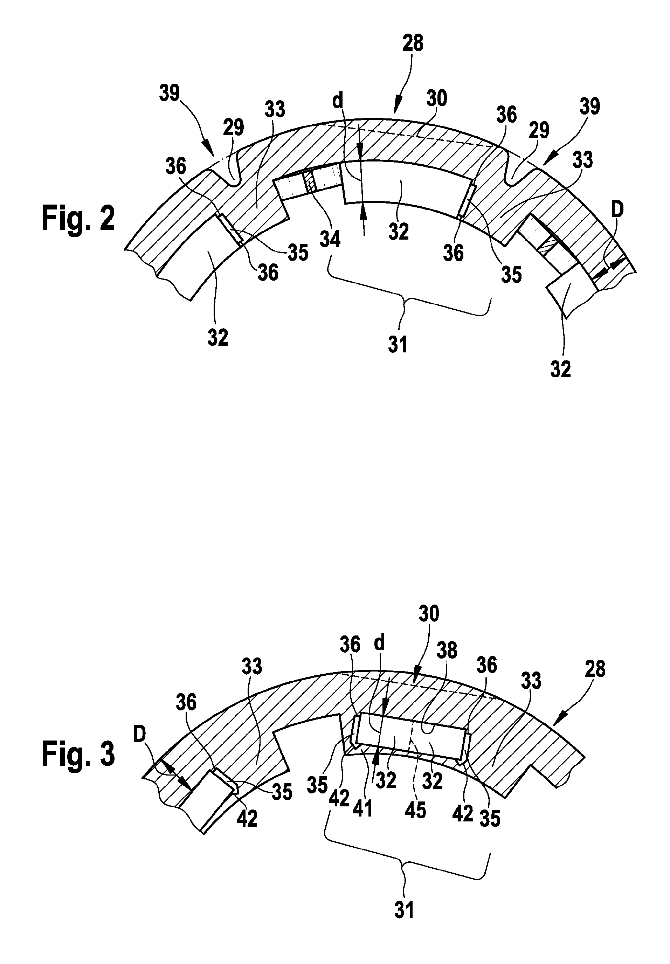

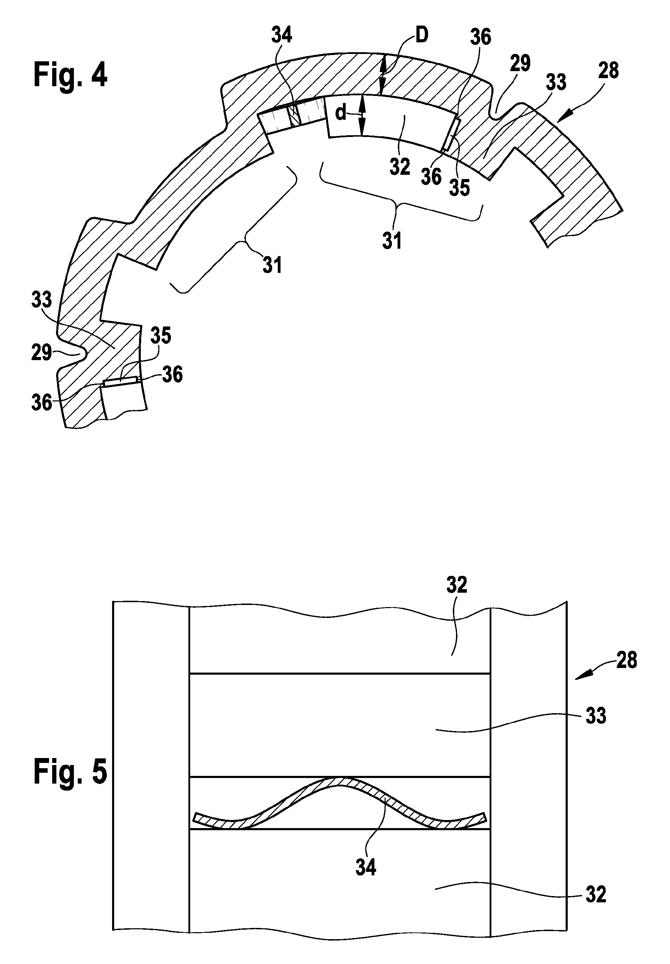

Figur 2 zeigt in schematisierter Darstellung den Stator einer Gleichstrommaschine mit einem aus massiven Eisen gebildeten Polgehäuse 28, an welches durch Materialverformung beim Eindrücken in den Bereichen 29 Flussleitstücke 33 angeformt sind. Die Flussleitstücke sind ringsegmentartig gestaltet und bilden zusammen mit Permanentmagneten 32 die Pole 31 des Stators. Die Positionierung und Arretierung der Permanentmagnete 32 am Innenumfang des Polgehäuses 28 erfolgt durch jeweils eine wellenförmige Feder 34, deren Ausbildung und Anordnung aus Figur 5 deutlicher erkennbar ist. Am Innenumfang des Polgehäuses 28 sind im dargestellten Ausführungsbeispiel jeweils sechs Permanentmagnete und sechs Flussleitstücke und damit sechs Pole 31 ausgebildet. Die kreissegmentartige Form der Flussleitstücke 33 und der Permanentmagnete 32 sichert zusammen mit dem Anpressdruck der Feder 34 die Positionierung der Teile am Innenumfang des Polgehäuses 28. Hierbei beträgt die gesamte Polbedeckung 0,7 bis 0,8, wobei der Anteil der Flussleitstücke zwischen 0,25 und 0,32 liegt.

Durch einen Spalt 35 in Umfangsrichtung zwischen den Permanentmagneten 32 und den Flussleitstücken 33, dessen Breite größer ist als der Arbeitsluftspalt zwischen dem Stator und dem Rotor der Maschine, kann der Materialeinsatz für die Permanentmagnete bei gleichem Fluss reduziert werden, da durch die Spalte 35 der magnetische Kurzschluss durch die Flussleitstücke 33 an den benachbarten Kanten der Permanentmagnete 32 verringert wird. Bei den relativ teuren Selten-Erd-Magneten bedeutet diese Materialeinsparung auch eine merkliche Kosteneinsparung. Die Positionierung der Permanentmagnete 32 und die exakte Einhaltung einer vorgegebenen Breite der Spalte 35 wird sichergestellt durch jeweils zwei, in Umfangsrichtung weisende Vorsprünge 36 an den Flussleitstücken 33, an denen sich die Permanentmagnete 32 in Umfangsrichtung abstützen. Bei der Verwendung von Selten-Erd-Magneten als Permanentmagnete 32 entspricht die Dicke d der Magnete etwa der Eisendicke D des Polgehäuses 28, wobei im mittleren Bereich der Permanentmagnete 32 wegen der dort vorliegenden geringeren magnetischen Sättigung die Wandstärke des Polgehäuses 28 reduziert werden kann, wie dies durch die gestrichelte Linie 30 angedeutet ist.

Die zur Ausbildung der Flussleitstücke 33 sickenförmig eingedrückten Bereiche 29 am Außenumfang des Polgehäuses 28 erstrecken sich über die axiale Länge der Permanentmagnete 32. Um die dargestellte Form der Flussleitstücke 33 bei der Materialumformung zu erreichen ist in das Polgehäuse 28 beim Eindrücken der Bereiche 29 von beiden Öffnungen des Polgehäuses 28 her ein zweiteiliges Stützwerkzeug eingeschoben, welches in der Figur nicht dargestellt ist. Diese Ausführung setzt voraus, dass die Flussleitstücke 33 etwa doppelt so breit sind wie die Wandstärke D des Polgehäuses 28, damit der Eisenquerschnitt über der Kante der Permanentmagnete 32 neben den eingedrückten Bereichen 29 nicht zu dünn wird. Gegebenenfalls kann aus diesem Grund die Wandstärke D des Polgehäuses 28 etwa dicker ausgeführt werden als magnetisch erforderlich wäre. Im Bereich der axialen Überstände des Polgehäuses 28 über die Permanentmagnete 32 hat das Polgehäuse eine konstante Wandstärke.

Eine andere Art der Herstellung der Flussleitstücke 33 durch mechanische Umformung des Eisenmaterials des Polgehäuses 28 ist zeichnerisch durch die strichpunktierten Linien 39 am Umfang des Polgehäuses über den Flussleitstücken 33 angedeutet. Diese alternative Fertigungsart verwendet ein rohrförmiges Polgehäuse 28 mit einem vergrößerten Durchmesser, wobei durch Kneten des Materials im Bereich der Permanentmagnete 32 über einem nicht dargestellten Stützwerkzeug das Eisenmaterial auf den gewünschten Durchmesser und die gewünschte Wandstärke D gebracht wird und aus dem überschüssigen Material die Flussleitstücke 33 gebildet werden. Bei diesem Verfahren bleibt die Wandstärke des Polgehäuses 28 über den Magnetkanten erhalten. Im Übrigen entspricht diese Ausführung der zuvor beschriebenen Anordnung. Außerdem kann eine zusätzliche Materialersparnis dadurch erreicht werden, dass die axial über die Magnete 32 hinausragenden Teile des Polgehäuses 28 bei unverändertem Außendurchmesser mit einer bis auf die Hälfte reduzierten Wandstärke ausgeführt werden. Daraus folgt weiterhin die Möglichkeit, Bürsten mit größerer Verschleißlänge unterzubringen.

Figur 3 zeigt eine Gestaltung des Polgehäuses 28 aus einzelnen gestanzten Lamellen, aus welchen durch Paketierung das Polgehäuse gebildet wird. Hierbei sind wie auch die in den folgenden Figuren für gleiche Teile gleiche Bezugszeichen wie in Figur 2 gewählt. Wegen der lamellierten und paketierten Ausführung des Polgehäuses 28 ist dessen Wandstärke D etwas größer als bei einem massiven Polgehäuse ausgebildet, da der magnetische Fluss bei hoher magnetischer Sättigung nicht in die axial überstehenden Teile des Polgehäuses ausweichen kann. Der Vorteil dieser stanzpaketierten Ausführung liegt insbesondere in der hohen Maßgenauigkeit des Polgehäuses 28 und des an seinem Innenumfang ausgebildeten Arbeitsluftspaltes zum Rotor hin. Hierdurch kann der Arbeitsluftspalt auf ein Mindestmaß reduziert und bei den Permanentmagneten 32 teures Magnetmaterial eingespart werden.

Ein weiterer Unterschied gegenüber der Ausführung des Maschinenstators in Figur 2 besteht bei der lamellierten und stanzpaketierten Ausführung des Polgehäuses 28 gemäß Figur 3 darin, dass in den einzelnen Lamellen taschenartige Aussparungen 38 entsprechend den Abmessungen der Permanentmagnete 32 freigestanzt sind. Diese bilden nach der Paketierung Aufnahmen für die Permanentmagnete 32, welche zum Luftspalt hin durch Stege 41 geschlossen sind. Hierdurch sind die Magnete zusätzlich gegen Korrosion geschützt. Am Außenumfang des Polgehäuses 28 ist durch die gestrichelte Linie 30 wiederum die Möglichkeit der Reduzierung der Polgehäusedicke D über den Magneten 32 angedeutet.

Weiterhin abweichend von der Ausführung gemäß Figur 2 sind in Figur 3 keine schalenförmige sondern quaderförmige Permanentmagnete 32 in die Taschen 38 des Blechpaketes des Polgehäuses 28 eingefügt, welche kostengünstiger sind als Ringsegmentmagnete. Die Stege 41 sind dabei mit Rücksicht auf den entstehenden magnetischen Kurzschluss dünn ausgeführt. Aus dem gleichen Grund sind bei dieser Ausführung die seitlichen Spalte 35 zwischen den Permanentmagneten 32 und den Flussleitstücken 33 beidseitig der Magnete vorgesehen. Diese Spalte 35 sind außerdem zum Arbeitsluftspalt hin verlängert, sodass in diesem Bereich ein Sättigungssteg 42 mit einer Länge entsteht, welche größer ist als die Breite des Arbeitsluftspaltes. Auf Haltefedern 34 kann bei dieser Ausführung verzichtet werden.

Durch die Verwendung eines einzelnen quaderförmigen Permanentmagneten 32 wird bei der Ausführung gemäß Figur 3 zwangsläufig trotz einer möglichen Verjüngung im Bereich der gestrichelten Linie 30 eine Vergrößerung des Außendurchmessers des Polgehäuses notwendig. Dem kann zusätzlich zu der Reduzierung der Polgehäusedicke entsprechend der gestrichelten Linie 30 entgegengewirkt werden durch die Verwendung von zwei quaderförmigen Permanentmagneten 32, wie dies durch die Trennungslinie 45 in der Magnetmitte angedeutet ist. Eine Tasche 38 für zwei schmälere Permanentmagnete anstelle eines einzelnen quaderförmigen Magneten 32 kann besser an die Kreisform des Polgehäuses 28 angepasst werden, wodurch der Steg 41 insbesondere in seinem Randbereich dünner und damit das gesamte Polgehäuse 28 kleiner ausgebildet werden kann. Die vorzugsweise beidseitige Anordnung von Sättigungsstegen 42 ist auch bei dieser, der Kreisform angenäherten Form der Stege 41 von Vorteil. Ein weiterer Vorteil der Stege 41 besteht darin, dass die Entmagnetisierungsgefahr für die Permanentmagnete 32 verringert wird.

Figur 4 zeigt eine Ausführung des Polgehäuses 28 für eine Maschine kleiner Leistung, wobei die Dicke d der Permanentmagnete 32 bei einer Magnetbestückung aller Pole sehr gering würde und beispielsweise unter 2 mm läge. In diesem Fall ist es vorteilhaft, wenn nur jeder zweite Pol 31 mit einem Permanentmagneten 32 bestückt wird und die dazwischen liegenden Pole 31' durch Eindrücken der Kontur des Polgehäuses 28 erzeugt werden. Im Übrigen entspricht die Ausführung gemäß Figur 4 weitgehend derjenigen in Figur 2. Die Fixierung der Magnete 32 erfolgt wiederum durch Federn 34, deren Ausbildung und Anordnung in Figur 5 separat dargestellt ist.

Figur 5 zeigt eine Abwicklung des Stators vom Rotor aus gesehen, wobei im Bereich der axialen Erstreckung der Permanentmagnete 32 und der Flussleitstücke 33 eine wellenförmige Feder 34 angeordnet ist. Diese kann wahlweise aus Runddraht oder aus Flachdraht bestehen und eine oder mehrere Wellen beschreiben. Die aus Federstahl hergestellte Feder 34 stützt sich dabei einerseits an einem Magneten 32 und andererseits an einem Flussleitstück 33 ab und sichert so die Arretierung der Magnete ohne zusätzliche Hilfsmittel am Polgehäuse 28.

## Patentansprüche

1. Gleichstrommaschine, insbesondere Starter (10) für eine Brennkraftmaschine, mit einem im Wesentlichen ringförmigen Polgehäuse (28), an dessen Innenumfang Permanentmagnete (32) und Flussleitstücke (33) angeordnet sind, **dadurch gekennzeichnet, dass** als Permanentmagnete (32) Magnete mit einer Remanenz von mindestens 600 mT verwendet und die Flussleitstücke (32) einteilig mit dem Polgehäuse (28) ausgebildet sind.

2. Gleichstrommaschine nach Anspruch 1, **dadurch gekennzeichnet, dass** als Permanentmagnete (32) Selten-Erd-Magnete verwendet sind.

3. Gleichstrommaschine nach Anspruch 1 oder 2, **dadurch gekennzeichnet, dass** als Permanentmagnete (32) FeNdB-Magnete verwendet sind.

4. Gleichstrommaschine nach einem der vorhergehenden Ansprüche, **dadurch gekennzeichnet, dass** das Polgehäuse (28) massiv ausgeführt ist und die Flussleitstücke (33)durch Umformung des Materials des Polgehäuses (28) ausgebildet sind.

5. Gleichstrommaschine nach Anspruch 4, **dadurch gekennzeichnet, dass** die Flussleitstücke durch eingedrückte Abschnitte (29) das Polgehäuses (28) gebildet sind.

6. Gleichstrommaschine nach Anspruch 4, **dadurch gekennzeichnet, dass** die Flussleitstücke (33) durch Kneten des Materials an das Polgehäuse (28) angeformt sind.

7. Gleichstrommaschine nach einem der Ansprüche 1 bis 3, **dadurch gekennzeichnet, dass** das Polgehäuse (28) durch Stanzpaketieren geblecht ausgeführt ist und die Flussleitstücke (33) durch die Gestaltung der Blechschnitte gebildet werden.

8. Gleichstrommaschine nach einem der vorhergehenden Ansprüche, **dadurch gekennzeichnet, dass** die Flussleitstücke (33) die Form von Ringsegmenten haben.

9. Gleichstrommaschine nach einem der vorhergehenden Ansprüche, **dadurch gekennzeichnet, dass** bei einer Gesamt-Polbedeckung von etwa 0,7 bis 0,8 die Bedeckung durch die Flussleitstücke (33) etwa 0,25 bis 0,32 beträgt.

10. Gleichstrommaschine nach einem der vorhergehenden Ansprüche, **dadurch gekennzeichnet, dass** bei Verwendung von Selten-Erd-Magneten als Permanentmagnete (32) die Magnetdicke (d) etwa gleich der Eisendicke (D) des Polgehäuses (28) ist.

11. Gleichstrommaschine nach einem der vorhergehenden Ansprüche, **dadurch gekennzeichnet, dass** in Umfangsrichtung zwischen den Permanentmagneten (32) und den Flussleitstücken (33) ein Luftspalt (35) mindestens in der Größenordnung des Arbeitsluftspaltes zwischen Stator und Rotor der Maschine ausgebildet ist.

12. Gleichstrommaschine nach Anspruch 11, **dadurch gekennzeichnet, dass** der Luftspalt (35) zwischen den Permanentmagneten (32) und den Flussleitstücken (33) durch wenigstens einen in Umfangsrichtung weisenden Vorsprung (36) an der den Permanentmagneten (32) zugewandten Seitenfläche der Flussleitstücke (33) erzeugt wird.

13. Gleichstrommaschine nach einem der vorhergehenden Ansprüche, **dadurch gekennzeichnet, dass** ringsegmentförmige Permanentmagnete (32) durch jeweils wenigstens eine wellenförmige Feder (34) in Umfangsrichtung gegen die Flussleitstücke (33) gepresst und positioniert sind.

14. Gleichstrommaschine nach einem der Ansprüche 1 bis 12, **dadurch gekennzeichnet, dass** bei einem Aufbau des Stators der Maschine mit paketierten Blechen jeweils wenigstens ein quaderförmiger Permanentmagnet (32) in einer ausgestanzten Tasche (38) des Pols (31) nahe dem Arbeitsluftspalt gehalten ist.

15. Gleichstrommaschine nach Anspruch 14, **dadurch gekennzeichnet, dass** an wenigstens einem, in Umfangsrichtung seitlichen Rand der Taschen (38) ein dem Arbeitsluftspalt benachbarter Sättigungssteg (42) ausgebildet ist.

16. Gleichstrommaschine nach einem der vorhergehenden Ansprüche, **dadurch gekennzeichnet, dass** die Wandstärke des Polgehäuses (28) zur Mitte der Permanentmagnete (32) hin reduziert ist.

17. Gleichstrommaschine nach einem der vorhergehenden Ansprüche, **dadurch gekennzeichnet, dass** nur jeder zweite Pol (31) des Stators mit einem Permanentmagneten (32) bestückt ist und die dazwischen liegenden Pole (31') durch entsprechend geformte Abschnitte des Polgehäuses (28) gebildet sind.
